# EUROPÄISCHE PATENTSCHRIFT

(11) **EP 4 367 430 B1**
(45) Veröffentlichungstag und Bekanntmachung des Hinweises auf die Patenterteilung: **08.10.2025**
(21) Anmeldenummer: 22729247.1
(22) Anmeldetag: 31.05.2022
(51) Int. Cl.: F17C 7/00, F17C 13/12

(54) **VERFAHREN ZUM ANSTEUERN EINER TANKVORRICHTUNG UND TANKVORRICHTUNG ZUR SPEICHERUNG EINES GASFÖRMIGEN MEDIUMS**
METHOD FOR ACTUATING A TANK DEVICE, AND TANK DEVICE FOR STORING A GASEOUS MEDIUM
PROCÉDÉ D'ACTIONNEMENT D'UN DISPOSITIF DE RÉSERVOIR ET DISPOSITIF DE RÉSERVOIR POUR LE STOCKAGE D'UN MILIEU GAZEUX

(30) Priorität: 08.07.2021 DE 102021207190
(43) Veröffentlichungstag der Anmeldung: 15.05.2024
(73) Patentinhaber: Robert Bosch GmbH, 70442 Stuttgart (DE)
(72) Erfinder: MUEHLEDER, Friedrich, 75417 Muehlacker (DE)
(86) Internationale Anmeldenummer: PCT/EP2022/064706
(87) Internationale Veröffentlichungsnummer: WO 2023/280471

(56) Entgegenhaltungen:
- WO-A1-2021/170344
- DE-A1- 102009 024 794
- DE-A1- 102014 000 713
- DE-A1- 102018 209 057

## Beschreibung

Die Erfindung betrifft ein Verfahren zum Ansteuern einer Tankvorrichtung und eine Tankvorrichtung zur Speicherung eines gasförmigen Mediums, insbesondere Wasserstoff, beispielsweise zur Anwendung in Fahrzeugen mit Brennstoffzellenantrieb oder in Fahrzeugen mit einem Wasserstoffverbrenner als Antrieb.

Stand der Technik Die DE 10 2014 000713 A1 zeigt eine Tankvorrichtung nach dem Stand der Technik.

Die DE 10 2017 212 485 A1 beschreibt eine Einrichtung zur Speicherung von verdichteten Fluiden, die als Kraftstoff für ein Fahrzeug dienen, wobei die Einrichtung mindestens zwei rohrförmige Tankmodule und mindestens einen Hochdruckkraftstoffzuteiler mit mindestens einer integrierten Regel- und Sicherheitstechnik umfasst.

Für die Sicherheitsvorkehrungen solch einer Einrichtung ist eine Vielzahl von Ventilen notwendig, wodurch die Komplexität des gesamten Gasspeichersystems sowie dessen Kosten erhöht werden.

### Vorteile der Erfindung

Das erfindungsgemäße Verfahren und die erfindungsgemäße Tankvorrichtung mit den kennzeichnenden Merkmalen des Anspruchs 1 und des Anspruchs 4 weisen demgegenüber den Vorteil auf, dass in einfacher Weise eine konstruktiv kompakte Tankvorrichtung mit gleichzeitiger Kostenersparnis realisiert wird.

Für das erfindungsgemäße Verfahren zum Ansteuern einer Tankvorrichtung zur Speicherung eines gasförmigen Mediums sind mindestens zwei Tankbehälter und eine mit den Tankbehältern verbindbare Zufuhrleitung vorhanden, wobei jeder Tankbehälter mindestens ein druckgesteuertes Steuerventil aufweist. Über das Steuerventil strömt gasförmiges Medium aus der Tankvorrichtung in die Zufuhrleitung in Richtung eines Verbrauchersystems. Das erfindungsgemäße Verfahren weist den folgenden Schritt auf:
Gleichzeitiges Öffnen der Steuerventile der Tankbehälter in einem Abstand von Millisekunden während einer Versorgung des Verbrauchersystems, so dass gasförmiges Medium aus der Tankvorrichtung über die Zufuhrleitung in Richtung des Verbrauchersystems geleitet wird.

Durch das nahezu gleichzeitige Öffnen der Steuerventile, d.h. in einem Abstand von Millisekunden, kann der geforderte maximale Massestrom für die Tankvorrichtung realisiert werden, ohne die Tankvorrichtung und insbesondere die Querschnitte der Steuerventile zu groß und zu teuer gestalten zu müssen. Auch die dazugehörige Magnetbaugruppe als Ansteuerung der Steuerventile kann in konstruktiv kompakter Weise ausgelegt werden. Auf diese Weise kann eine kompakte und kostengünstige Tankvorrichtung realisiert werden.

Erfindungsgemäß ist es vorgesehen, dass der Abstand des Öffnens der Steuerventile einen Bereich von 1 Millisekunde bis 20 Millisekunden umfasst. So kann beispielsweise die Belastung durch den Stromfluss auf ein Steuergerät der Tankvorrichtung minimiert werden.

In weiterer Ausgestaltung der Erfindung ist es vorteilhaft vorgesehen, dass die Tankvorrichtung eine mit den Tankbehältern verbindbare Ventilleitung umfasst, in welcher Ventilleitung ein zentrales Schmelzsicherheitsventil angeordnet ist. Das Schmelzsicherheitsventil öffnet bei Überschreiten eines vorbestimmten Temperaturschwellwerts und leitet so das gasförmige Medium aus den Tankbehältern über die Ventilleitung in eine Umgebung. So ist sichergestellt, dass im Falle eines Wärmeeintrags auf die Tankvorrichtung, d.h. beispielsweise ein Brand, das gasförmige Medium aus den Tankbehältern geleitet und ein Bersten dieser verhindert wird.

In vorteilhafter Weiterbildung ist es vorgesehen, dass zwischen den jeweiligen Tankbehältern und der Ventilleitung jeweils ein Steuerventil angeordnet ist, durch welches Steuerventil eine fluidische Verbindung zwischen den Tankbehältern und der Ventilleitung gesteuert wird. Auf diese Weise kann das gasförmige Medium aus den Tankbehältern in die Ventilleitung abgeströmt werden oder durch Absperren des Steuerventils in dem jeweiligen Tankbehälter gespeichert bleiben. Letzteres ist insbesondere auch als Sicherheitsvorkehrung, beispielsweise bei einem Bruch der Ventilleitung von Vorteil.

Die erfindungsgemäße Tankvorrichtung zur Speicherung eines gasförmigen Mediums, insbesondere Wasserstoff weist mindestens zwei Tankbehälter und eine mit den Tankbehältern verbindbare Zufuhrleitung auf. Jeder Tankbehälter umfasst mindestens ein druckgesteuertes Steuerventil, welches Steuerventil zwischen dem jeweiligen Tankbehälter und der Zufuhrleitung angeordnet ist. Die Zufuhrleitung ist mit einem Verbrauchersystem fluidisch verbunden, wobei die Tankvorrichtung ein Steuergerät aufweist, welches Steuergerät dazu eingerichtet ist, das zuvor beschriebene erfindungsgemäße Verfahren durchzuführen. So kann in konstruktiv kompakter und auf kostensparende Weise eine Tankvorrichtung zur Speicherung eines gasförmigen Mediums für verschiedene Verbrauchersysteme realisiert werden.

In vorteilhafter Weiterbildung ist es vorgesehen, dass das Steuerventil des jeweiligen Tankbehälters als Magnetventil ausgebildet ist. So ist eine einfache Ansteuerung möglich.

In vorteilhafter Weiterbildung sind die Tankbehälter röhrenförmig ausgebildet. Vorteilhafterweise umfassen die Tankbehälter ein kohlefaserverstärktes Material.

Durch die Geometrie und geeignete Wahl der Tankbehälter können diese in einfacher Weise an das gasförmige Medium und beispielsweise an ein Chassis eines Fahrzeugs angepasst werden.

Weiterhin ist erfindungsgemäß ein Steuergerät vorhanden, welches dazu eingerichtet ist, das erfindungsgemäße Verfahren durchzuführen. Weiterhin sind auch ein Brennstoffzellensystem nach Anspruch 9, ein brennstoffzellenbetriebenes Fahrzeug nach Anspruch 10 und ein wasserstoffbetriebenes Fahrzeug nach Anspruch 11 erfindungsgemäß.

Die beschriebene Tankvorrichtung und das die Tankvorrichtung ansteuernde Verfahren eignen sich vorzugsweise in einem Brennstoffzellensystem zum Speichern eines gasförmigen Mediums, insbesondere Wasserstoff, für den Betrieb einer Brennstoffzelle.

In vorteilhaften Verwendungen kann die Tankvorrichtung und das erfindungsgemäße Verfahren in Fahrzeugen mit einem Brennstoffzellenantrieb verwendet werden.

In vorteilhaften Verwendungen kann die Tankvorrichtung und das erfindungsgemäße Verfahren in Fahrzeugen mit einem Wasserstoffantrieb verwendet werden, beispielsweise in einem Fahrzeug mit Wasserstoff-Verbrenner als Antrieb.

### Zeichnung

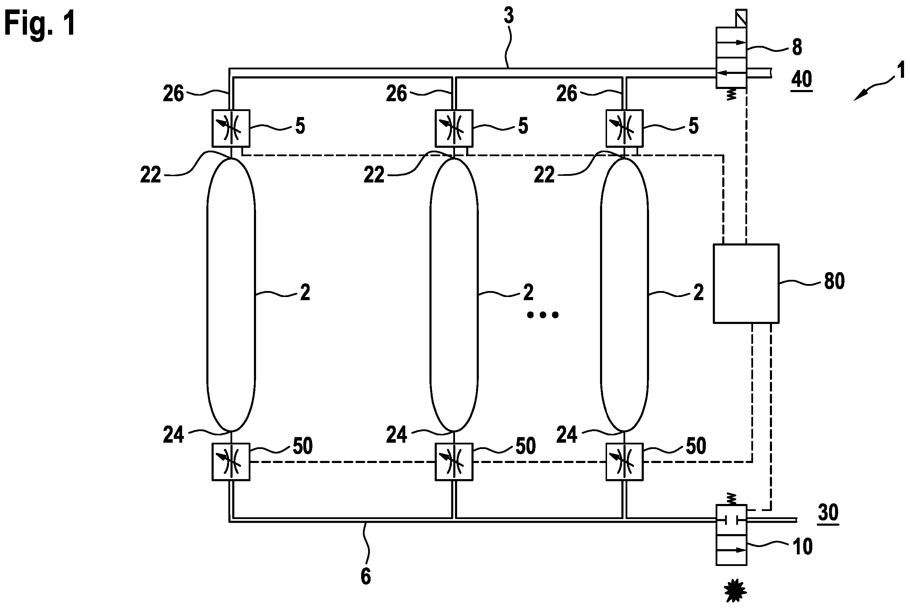

In der Zeichnung ist ein Ausführungsbeispiel einer Tankvorrichtung mit einem erfindungsgemäßen Verfahren zum Ansteuern der Tankvorrichtung dargestellt. Es zeigt in
Fig. 1eine Draufsicht eines möglichen Ausführungsbeispiels einer Tankvorrichtung mit einem erfindungsgemäßen Verfahren.

### Beschreibung des Ausführungsbeispiels

In der Fig.1 ist eine Draufsicht eines Ausführungsbeispiels einer erfindungsgemäßen Tankvorrichtung 1 gezeigt. Die Tankvorrichtung 1 weist mehrere Tankbehälter 2 auf, welche mit gasförmigem Medium, beispielsweise Wasserstoff, befüllt sind. Die Tankbehälter 2 sind röhrenförmig ausgebildet. Außerdem umfassen die Tankbehälter 2 beispielsweise ein kohlefaserverstärktes Material.

Weiterhin ist jeder Tankbehälter 2 an einem ersten Ende über eine Abzweigung 26 mit einer Zufuhrleitung 3 verbunden, wobei in der Abzweigung 26 der Zufuhrleitung 3 ein Steuerventil 5 angeordnet ist. Somit weist jeder Tankbehälter 2 ein Steuerventil 5 auf, über welches das gasförmige Medium aus dem Tankbehälter 2 in Richtung der Zufuhrleitung 3 ableitbar ist. Die Steuerventile 5 sind beispielsweise durch einen Elektromagneten ansteuerbar.

In der Zufuhrleitung 3 ist weiterhin ein Druckregelventil 8 angeordnet, welches hier als Magnetventil ausgebildet ist. Das Druckregelventil 8 steuert so mit Hilfe eines Elektromagneten die Wasserstoffzufuhr aus der Tankvorrichtung 1 in Richtung eines Verbrauchersystems 40, beispielsweise eines Brennstoffzellensystems oder eines Wasserstoffverbrennersystems. Das Druckregelventil 8 reguliert hierbei auch den Druck des gasförmigen Mediums, insbesondere als Druckminderung des gasförmigen Mediums für dessen Bereitstellung für das Verbrauchersystem 40.

Weiterhin ist jeder Tankbehälter 2 in einer alternativen Anordnung an einem anderen Ende 24 mit einer Ventilleitung 6 verbunden, wobei zwischen jedem einzelnen Tankbehälter 2 und der Ventilleitung 6 ein weiteres Steuerventil 50 angeordnet ist. Im normalen Betriebszustand sind auch die weiteren Steuerventile 50 geöffnet, so dass eine Verbindung zwischen dem Innern des Tankbehälters 2 und der Ventilleitung 6 geöffnet ist. In der Ventilleitung 6 ist ein zentrales Schmelzsicherheitsventil 10 angeordnet. Das Schmelzsicherheitsventil 10 ist im Normalfall geschlossen und öffnet lediglich im Brandfall oder bei Überschreitung eines vorbestimmten Temperaturschwellwertes von beispielsweise 105°C, so dass der Wasserstoff aus den Tankbehältern 2 über die Ventilleitung 6 in eine Umgebung 30 ausgeleitet werden kann und eine mögliche Explosion der Tankbehälter 2 aufgrund eines zu hohen Drucks unterbunden wird.

Die Steuerventile 5, 50 sind jeweils an den Enden 22, 24 der Tankbehälter 2 angeordnet, so dass im Falle eines Unfalls der Tankvorrichtung 1 oder bei einem Bruch der ersten Leitung 3 und/oder der Ventilleitung 6 die Steuerventile 5, 50 schließen und das gasförmige Medium nicht aus dem Tankbehälter 2 austreten kann.

Weiterhin umfasst die Tankvorrichtung 1 ein Steuergerät 80, welches mit den Steuerventilen 5, 50 und dem Schmelzsicherheitsventil 10 verbunden ist. Das Steuergerät 80 weist auch eine Schnittstelle zu einer nicht gezeigten Steuereinheit des Verbrauchersystems 40 auf.

Soll nun dem Verbrauchersystem 40 gasförmiges Medium, beispielsweise Wasserstoff, zugeführt werden, werden alle Steuerventile 5 der Tankbehälter 2 über den jeweiligen Elektromagneten des jeweiligen Steuerventils 5 mittels des Steuergeräts 80 gleichzeitig in einem Abstand von Millisekunden angesteuert und geöffnet und das gasförmige Medium aus der Tankvorrichtung 1 über die Zufuhrleitung 3 in Richtung des Verbrauchersystems 40 geleitet. Das heißt, die Steuerventile 5 werden in einem Abstand von 1 Millisekunde bis 20 Millisekunden nacheinander geöffnet. Dadurch ist eine Realisierung von geringen geometrischen Dimensionen der Steuerventilquerschnitte trotz beispielsweise maximalem Massestroms möglich. Weiterhin kann so beispielsweise ein Brennstoffzellensystem als Verbrauchersystem 40 mit Brennstoff, beispielsweise Wasserstoff, versorgt werden.

Weiterhin eignet sich die Tankvorrichtung 1 und das genannte Verfahren dazu auch einem brennstoffzellenbetriebenen Fahrzeug für die Bereitstellung des Brennstoffs, beispielsweise Wasserstoff, oder in einem wasserstoffbetriebenen Fahrzeug für die Bereitstellung von Wasserstoff.

## Patentansprüche

1. Verfahren zum Ansteuern einer Tankvorrichtung (1) zur Speicherung eines gasförmigen Mediums mit mindestens zwei Tankbehältern (2) und eine mit den Tankbehältern (2) verbindbare Zufuhrleitung (3), wobei jeder Tankbehälter (2) mindestens ein druckgesteuertes Steuerventil (5) aufweist, über welches Steuerventil (5) gasförmiges Medium aus der Tankvorrichtung (1) in die Zufuhrleitung (3) in Richtung eines Verbrauchersystems (40) strömt, **gekennzeichnet durch** die folgenden Schritte:
a. Gleichzeitiges Öffnen der Steuerventile (5) der Tankbehälter (2) in einem Abstand von Millisekunden während einer Versorgung des Verbrauchersystems (40), so dass gasförmiges Medium aus der Tankvorrichtung (1) über die Zufuhrleitung (3) in Richtung des Verbrauchersystems (40) geleitet wird, wobei der Abstand des Öffnens der Steuerventile (5) einen Bereich von 1 Millisekunde bis 20 Millisekunden umfasst.

2. Verfahren nach Anspruch 1, **dadurch gekennzeichnet, dass** die Tankvorrichtung (1) eine mit den Tankbehältern (2) verbindbare Ventilleitung (6) umfasst, in welcher Ventilleitung (6) ein zentrales Schmelzsicherheitsventil (10) angeordnet ist, welches Schmelzsicherheitsventil (10) bei Überschreiten eines vorbestimmten Temperaturschwellwerts öffnet und so das gasförmige Medium aus den Tankbehältern (2) über die Ventilleitung (6) in eine Umgebung (30) leitet.

3. Verfahren nach Anspruch 2, **dadurch gekennzeichnet, dass** zwischen den jeweiligen Tankbehältern (2) und der Ventilleitung (6) jeweils ein Steuerventil (50) angeordnet ist, durch welches Steuerventil (50) eine fluidische Verbindung zwischen den Tankbehältern (2) und der Ventilleitung (6) gesteuert wird.

4. Tankvorrichtung (1) zur Speicherung eines gasförmigen Mediums, insbesondere Wasserstoff, mit mindestens zwei Tankbehälter (2) und eine mit den Tankbehältern (2) verbindbare Zufuhrleitung (3), wobei jeder Tankbehälter (2) mindestens ein druckgesteuertes Steuerventil (5) umfasst, welches Steuerventil (5) zwischen dem jeweiligen Tankbehälter (2) und der Zufuhrleitung (3) angeordnet ist und wobei die Zufuhrleitung (3) mit einem Verbrauchersystem (40) fluidisch verbunden ist, wobei die Tankvorrichtung (1) ein Steuergerät aufweist (80), welches Steuergerät (80) dazu eingerichtet ist, das Verfahren nach einem der vorhergehenden Ansprüche durchzuführen.

5. Tankvorrichtung (1) nach Anspruch 4, **dadurch gekennzeichnet, dass** das Steuerventil (5) des jeweiligen Tankbehälters (2) als Magnetventil ausgebildet ist.

6. Tankvorrichtung (1) nach Anspruch 4 oder 5, **dadurch gekennzeichnet, dass** die Tankbehälter (2) röhrenförmig ausgebildet sind.

7. Tankvorrichtung (1) nach Anspruch 4, 5 oder 6, **dadurch gekennzeichnet, dass** die Tankbehälter (2) ein kohlefaserverstärktes Material umfasst.

8. Steuergerät (80), welches dazu eingerichtet ist, das Verfahren nach einem der Ansprüche 1 bis 3 durchzuführen.

9. Brennstoffzellensystem mit einer Tankvorrichtung (1) zum Speichern eines gasförmigen Mediums, insbesondere Wasserstoff, wobei die Tankvorrichtung (1) mindestens zwei Tankbehälter (2) und eine mit den Tankbehältern (2) verbindbare Zufuhrleitung (3) aufweist, wobei jeder Tankbehälter (2) mindestens ein druckgesteuertes Steuerventil (5) aufweist, über welches Steuerventil (5) gasförmiges Medium aus der Tankvorrichtung (1) in die Zufuhrleitung (3) in Richtung eines Verbrauchersystems (40) strömt, wobei die Tankvorrichtung (1) mit dem Verfahren nach einem der Ansprüche 1 bis 3 angesteuert wird.

10. Brennstoffzellenbetriebenes Fahrzeug mit einer Tankvorrichtung (1) zum Speichern eines gasförmigen Mediums, insbesondere Wasserstoff, wobei die Tankvorrichtung (1) mindestens zwei Tankbehälter (2) und eine mit den Tankbehältern (2) verbindbare Zufuhrleitung (3) aufweist, wobei jeder Tankbehälter (2) mindestens ein druckgesteuertes Steuerventil (5) aufweist, über welches Steuerventil (5) gasförmiges Medium aus der Tankvorrichtung (1) in die Zufuhrleitung (3) in Richtung eines Verbrauchersystems (40) strömt, welche Tankvorrichtung (1) mit dem Verfahren nach einem der Ansprüche 1 bis 3 angesteuert wird.

11. Wasserstoffbetriebenes Fahrzeug mit einer Tankvorrichtung (1) zum Speichern von Wasserstoff, wobei die Tankvorrichtung (1) mindestens zwei Tankbehälter (2) und eine mit den Tankbehältern (2) verbindbare Zufuhrleitung (3) aufweist, wobei jeder Tankbehälter (2) mindestens ein druckgesteuertes Steuerventil (5) aufweist, über welches Steuerventil (5) gasförmiges Medium aus der Tankvorrichtung (1) in die Zufuhrleitung (3) in Richtung eines Verbrauchersystems (40) strömt, welche Tankvorrichtung (1) mit dem Verfahren nach einem der Ansprüche 1 bis 3 angesteuert wird.

## Claims

1. Method for actuating a tank device (1) for storing a gaseous medium, having at least two tank containers (2) and a supply line (3) which is connectable to the tank containers (2), wherein each tank container (2) has at least one pressure-controlled pilot valve (5) by way of which pilot valve (5) gaseous medium flows from the tank device (1) into the supply line (3) in the direction of a consumer system (40), **characterized by** the following steps:
a. simultaneous opening of the pilot valves (5) of the tank containers (2) at a spacing of milliseconds during a supply of the consumer system (40), so that gaseous medium from the tank device (1) is directed via the supply line (3) towards the consumer system (40), wherein the spacing between the opening of the pilot valves (5) is in a range from 1 millisecond to 20 milliseconds.

2. Method according to Claim 1, **characterized in that** the tank device (1) comprises a valve line (6) which is connectable to the tank containers (2), and in which valve line (6) is disposed a central melt safety valve (10), which melt safety valve (10) opens when a predetermined temperature threshold is exceeded, thus directing the gaseous medium from the tank containers (2) by way of the valve line (6) into an environment (30).

3. Method according to Claim 2, **characterized in that** disposed between the respective tank containers (2) and the valve line (6) is in each case a pilot valve (50) by way of which pilot valve (50) a fluidic connection between the tank containers (2) and the valve line (6) is controlled.

4. Tank device (1) for storing a gaseous medium, in particular hydrogen, having at least two tank containers (2) and a supply line (3) which is connectable to the tank containers (2), wherein each tank container (2) comprises at least one pressure-controlled pilot valve (5), which pilot valve (5) is disposed between the respective tank container (2) and the supply line (3), and wherein the supply line (3) is fluidically connected to a consumer system (40), wherein the tank device (1) has a control apparatus (80), which control apparatus (80) is specified to carry out the method according to one of the preceding claims.

5. Tank device (1) according to Claim 4, **characterized in that** the pilot valve (5) of the respective tank container (2) is designed as a solenoid valve.

6. Tank device (1) according to Claim 4 or 5, **characterized in that** the tank containers (2) are designed to be tubular in shape.

7. Tank device (1) according to Claim 4, 5 or 6, **characterized in that** the tank container (2) comprises a carbon fibre-reinforced material.

8. Control apparatus (80) which is specified to carry out the method according to one of Claims 1 to 3.

9. Fuel cell system having a tank device (1) for storing a gaseous medium, in particular hydrogen, wherein the tank device (1) has at least two tank containers (2) and a supply line (3) which is connectable to the tank containers (2), wherein each tank container (2) has at least one pressure-controlled pilot valve (5), by way of which pilot valve (5) gaseous medium flows from the tank device (1) into the supply line (3) in the direction of a consumer system (40), wherein the tank device (1) is actuated by the method according to one of Claims 1 to 3.

10. Fuel cell-powered vehicle having a tank device (1) for storing a gaseous medium, in particular hydrogen, wherein the tank device (1) has at least two tank containers (2) and a supply line (3) which is connectable to the tank containers (2), wherein each tank container (2) has at least one pressure-controlled pilot valve (5), by way of which pilot valve (5) gaseous medium flows from the tank device (1) into the supply line (3) in the direction of a consumer system (40), which tank device (1) is actuated by the method according to one of Claims 1 to 3.

11. Hydrogen-powered vehicle having a tank device (1) for storing hydrogen, wherein the tank device (1) has at least two tank containers (2) and a supply line (3) which is connectable to the tank containers (2), wherein each tank container (2) has at least one pressure-controlled pilot valve (5), by way of which pilot valve (5) gaseous medium flows from the tank device (1) into the supply line (3) in the direction of a consumer system (40), which tank device (1) is actuated by the method according to one of Claims 1 to 3.

## Revendications

1. Procédé de pilotage d'un dispositif de réservoir (1) destiné à stocker un milieu gazeux avec au moins deux contenants (2) de réservoir et une conduite d'alimentation (3) pouvant être raccordée aux contenants (2) de réservoir, chaque contenant (2) de réservoir comportant au moins une soupape de commande (5) commandée par pression, par laquelle soupape de commande (5) du milieu gazeux provenant du dispositif de réservoir (1) s'écoule dans la conduite d'alimentation (3) en direction d'un système consommateur (40), **caractérisé par** les étapes suivantes :
a. l'ouverture simultanée des soupapes de commande (5) des contenants (2) de réservoir à un intervalle de millisecondes pendant un approvisionnement du système consommateur (40) de telle sorte que du milieu gazeux provenant du dispositif de réservoir (1) est dirigé en direction du système consommateur (40) par la conduite d'alimentation (3), l'intervalle entre l'ouverture des soupapes de commande (5) comprenant une plage de 1 milliseconde à 20 millisecondes.

2. Procédé selon la revendication 1, **caractérisé en ce que** le dispositif de réservoir (1) comprend une conduite de soupape (6) pouvant être raccordée aux contenants (2) de réservoir, dans laquelle conduite de soupape (6) une soupape de sécurité anti-fusion (10) centrale est disposée, laquelle soupape de sécurité anti-fusion (10) s'ouvre en cas de dépassement d'une valeur de seuil de température prédéfinie et dirige ainsi le milieu gazeux provenant des contenants (2) de réservoir dans un environnement (30) par la conduite de soupape (6).

3. Procédé selon la revendication 2, **caractérisé en ce qu'**est disposée entre les contenants (2) de réservoir respectifs et la conduite de soupape (6) respectivement une soupape de commande (50), par laquelle soupape de commande (50) une liaison fluidique entre les contenants (2) de réservoir et la conduite de soupape (6) est commandée.

4. Dispositif de réservoir (1) destiné au stockage d'un milieu gazeux, en particulier d'hydrogène, avec au moins deux contenants (2) de réservoir et une conduite d'alimentation (3) pouvant être raccordée aux contenants (2) de réservoir, chaque contenant (2) de réservoir comprenant au moins une soupape de commande (5) commandée par pression, laquelle soupape de commande (5) est disposée entre le contenant (2) de réservoir respectif et la conduite d'alimentation (3) et la conduite d'alimentation (3) étant reliée fluidiquement à un système consommateur (40), le dispositif de réservoir (1) comportant un appareil de commande (80), lequel appareil de commande (80) est mis au point pour effectuer le procédé selon l'une des revendications précédentes.

5. Dispositif de réservoir (1) selon la revendication 4, **caractérisé en ce que** la soupape de commande (5) du contenant (2) de réservoir respectif est réalisée comme une soupape magnétique.

6. Dispositif de réservoir (1) selon la revendication 4 ou 5, **caractérisé en ce que** les contenants (2) de réservoir sont réalisés sous forme de tubes.

7. Dispositif de réservoir (1) selon la revendication 4, 5 ou 6, **caractérisé en ce que** le contenant (2) de réservoir comprend un matériau renforcé par des fibres de carbone.

8. Appareil de commande (80), lequel est mis au point pour effectuer le procédé selon l'une des revendications 1 à 3.

9. Système de piles à combustible avec un dispositif de réservoir (1) destiné à stocker un milieu gazeux, en particulier de l'hydrogène, le dispositif de réservoir (1) comportant au moins deux contenants (2) de réservoir et une conduite d'alimentation (3) pouvant être raccordée aux contenants (2) de réservoir, chaque contenant (2) de réservoir comportant au moins une soupape de commande (5) commandée par pression, par laquelle soupape de commande (5) du milieu gazeux provenant du dispositif de réservoir (1) s'écoule dans la conduite d'alimentation (3) en direction du système consommateur (40), le dispositif de réservoir (1) étant piloté avec le procédé selon l'une des revendications 1 à 3.

10. Véhicule fonctionnant avec des piles à combustible avec un dispositif de réservoir (1) destiné à stocker un milieu gazeux, en particulier de l'hydrogène, le dispositif de réservoir (1) comportant au moins deux contenants (2) de réservoir et une conduite d'alimentation (3) pouvant être raccordée aux contenants (2) de réservoir, chaque contenant (2) de réservoir comportant au moins une soupape de commande (5) commandée par pression, par laquelle soupape de commande (5) du milieu gazeux provenant du dispositif de réservoir (1) s'écoule dans la conduite d'alimentation (3) en direction du système consommateur (40), le dispositif de réservoir (1) étant piloté avec le procédé selon l'une des revendications 1 à 3.

11. Véhicule fonctionnant à l'hydrogène avec un dispositif de réservoir (1) destiné à stocker de l'hydrogène, le dispositif de réservoir (1) comportant au moins deux contenants (2) de réservoir et une conduite d'alimentation (3) pouvant être raccordée aux contenants (2) de réservoir, chaque contenant (2) de réservoir comportant au moins une soupape de commande (5) commandée par pression, par laquelle soupape de commande (5) du milieu gazeux provenant du dispositif de réservoir (1) s'écoule dans la conduite d'alimentation (3) en direction du système consommateur (40), le dispositif de réservoir (1) étant piloté avec le procédé selon l'une des revendications 1 à 3.
